# FASCICULE DE BREVET EUROPEEN

(11) **EP 1 049 597 B1**
(45) Date de publication et mention de la délivrance du brevet: **31.08.2005**
(21) Numéro de dépôt: 99956151.7
(22) Date de dépôt: 25.11.1999
(51) Int. Cl.: B60J 5/04

(54) **ELEMENT DE STRUCTURE D'UNE PORTE DE VEHICULE AUTOMOBILE ET PORTE DE VEHICULE AUTOMOBILE COMPORTANT UN TEL ELEMENT**
KAROSSERIEBAUTEIL FÜR EINE KRAFTFAHRZEUGTÜR UND KRAFTFAHRZEUGTÜR MIT EINEM SOLCHEN BAUTEIL
STRUCTURAL ELEMENT OF A MOTOR VEHICLE DOOR AND MOTOR VEHICLE DOOR COMPRISING SAME

(30) Priorité: 27.11.1998 FR 9814989
(43) Date de publication de la demande: 08.11.2000
(73) Titulaire: Wagon Automotive S.A., 78306 Poissy (FR)
(72) Inventeur: AUROY, Dominique, F-91460 Marcoussis (FR); CASIN, Stéphane, F-78150 Le Chesnay (FR); ANBARI, Bilal, F-78490 Boissy Sans Avoir (FR)
(74) Mandataire: Moncheny, Michel
(86) Numéro de dépôt international: PCT/FR1999/002920
(87) Numéro de publication internationale: WO 2000/032426

(56) Documents cités:
- EP-A- 0 613 798
- DE-A- 19 639 280
- DE-A- 19 728 546
- DE-U- 9 414 798
- GB-A- 2 315 513
- PATENT ABSTRACTS OF JAPAN vol. 018, no. 072 (M-1555), 7 février 1994 (1994-02-07) & JP 05 286364 A (NISSAN MOTOR CO LTD), 2 novembre 1993 (1993-11-02)

## Description

La présente invention a pour objet un élément de structure d'une porte de véhicule automobile.

Un tel élément est par example connu du document EP-A-997 331, qui fait partie de l'état de la technique au sens de l'Article 54(3) CBE.

Un autre élément de structure est connu du document GB-A-2 315 513.

Généralement, une porte de véhicule automobile est constituée par un caisson formant l'élément principal de structure sur lequel sont rapportés des organes complémentaires comme par exemple un renfort de charnières, un renfort de serrure, un renfort longitudinal supérieur appelé bandeau et une barre anti-intrusion.

A la partie supérieure de l'élément de structure est fixé un cadre délimitant une baie obturable par une vitre déplaçable verticalement entre une position d'obturation de la baie et une opposition escamotée à l'intérieur dudit élément et d'ouverture de ladite baie.

L'élément de structure est le plus souvent formé par une paroi externe et une doublure interne qui délimitent entre elles un espace pour l'agencement de divers composants, comme par exemple les mécanismes de manoeuvre de la vitre coulissante.

Compte tenu de leur structure, les portes représentent un poids non négligeable dans la masse totale du véhicule automobile.

Or, la nécessité actuelle de réduire la masse des véhicules afin de diminuer la pollution ainsi que la consommation, entraîne les constructeurs automobiles à concevoir des structures de véhicule plus légères.

Pour cela, certains constructeurs automobiles utilisent l'aluminium pour réaliser les éléments de la carrosserie et notamment les portes ce qui permet de réduire la masse du véhicule.

En effet, l'aluminium a une faible densité et par conséquent une masse trois fois inférieure à l'acier pour la même épaisseur. Mais, son principal inconvénient réside dans son prix qui est nettement supérieur à celui de l'acier.

C'est pour cette raison que la conception des éléments de la carrosserie du véhicule réalisés en aluminium doit être optimisée afin de réduire au maximum les chutes et de mettre la matière dans les zones où elle est nécessaire, tout en respectant le cahier des charges imposées pour ces éléments.

Mais, jusqu'à présent les pièces constituant les caissons de porte sont formées par emboutissage, ce qui nécessite de prévoir des ébauches suffisamment grandes pour pouvoir réaliser l'emboutissage, entraînant de ce fait des chutes d'aluminium importantes, ce qui augmente le prix de revient de ces caissons.

De plus, chaque pièce constituant le caisson de porte doit comporter des agencements particuliers pour l'assemblage et la fixation des différentes pièces entre elles ce qui rend complexe la réalisation de ces pièces par emboutissage.

L'invention a pour but de proposer une nouvelle conception d'un élément de structure d'une porte de véhicule automobile qui évite les inconvénients précédemment mentionnés.

L'invention a donc pour objet un élément de structure tel que défini par la revendication 1. Des modes de réalisation sont indiqués dans les revendications 2 à 9.

L'invention a également pour objet une porte de véhicule automobile, caractérisée en ce qu'elle comporte un élément de structure tel que mentionné ci-dessus.

L'invention sera mieux comprise à la lecture de la description qui va suivre, donnée uniquement à titre d'exemple et faite en se référant aux dessins annexés, sur lesquels :
- la figure 1 est une vue schématique en perspective d'une porte d'un véhicule automobile munie d'un caisson conforme à l'invention,
- la figure 2 est une vue schématique en perspective éclatée montrant les différents éléments composant la porte représentée à la figure 1,
- la figure 3 est une vue en perspective et à plus grande échelle d'un exemple de réalisation d'un élément de structure conforme à l'invention, par exemple d'une porte avant,
- la figure 4 est une vue en perspective et à plus grande échelle d'un exemple de réalisation d'un élément de structure conforme à l'invention, par exemple d'une porte arrière.

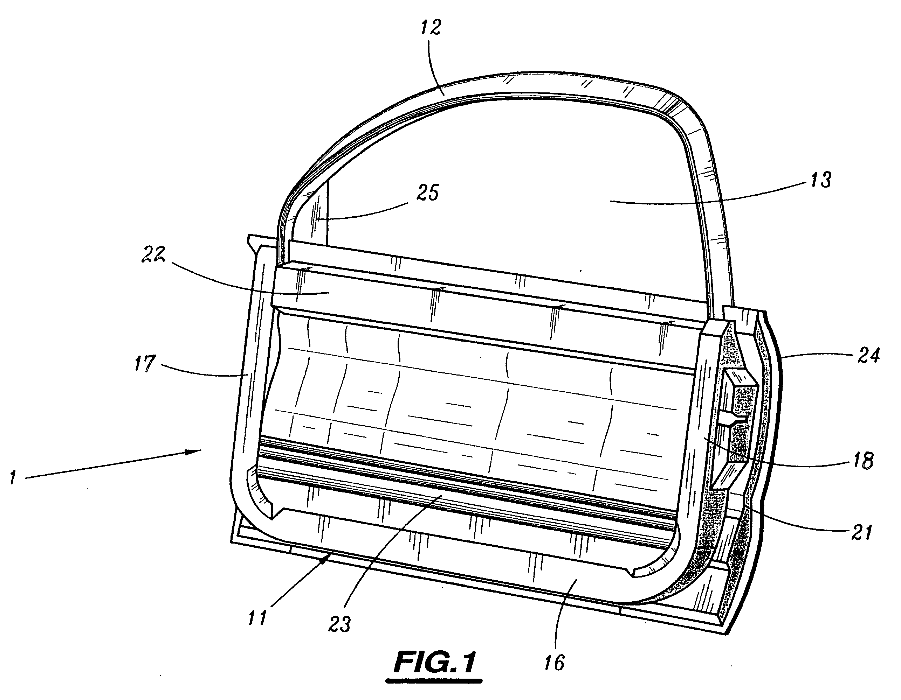

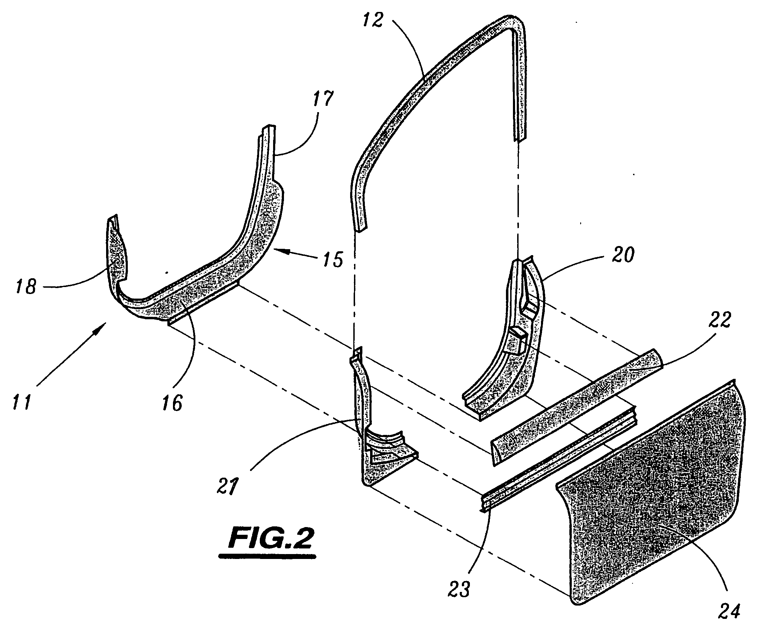

Dans un but de simplification, sur les figures 1 et 2, on a représenté uniquement les principaux éléments d'une porte d'un véhicule automobile.

La porte désignée dans son ensemble par la référence 1 comporte une partie inférieure formée par un élément principal de structure ou caisson 11 sur lequel sont rapportés des organes complémentaires et une partie supérieure comprenant un cadre 12 délimitant une baie 13 obturable par une vitre coulissante non représentée.

L'élément de structure ou caisson 11 supporte notamment un renfort de charnières 20, un renfort de serrure 21, un bandeau horizontal 22, une base anti-intrusion 23, le cadre 12 et un panneau extérieur 24.

Ce caisson 11 comprend une seule pièce formée par un profilé 15 cintré présentant un contour général correspondant au contour de la partie inférieure de l'entrée de porte du véhicule recouverte par le panneau extérieur 24.

Selon un premier mode de réalisation, le profilé 15 est mis en forme par une profileuse et dans ce cas il est en aluminium ou en alliage d'aluminium ou en acier.

Selon un second mode de réalisation, le profilé 15 est formé par extrusion et dans ce cas il est en aluminium ou en alliage d'aluminium.

Dans certaines zones, le profilé 15 est détouré soit après le cintrage, soit avant le cintrage pour lui donner sa forme définitive et pour le montage des autres organes composant la porte 1.

La section du profilé 15 dépend de la forme et des caractéristiques mécaniques de la porte 1.

D'une manière générale, le profilé 15 comporte une branche inférieure centrale 16 reliant deux montants latéraux, respectivement 17 et 18, opposés et verticaux.

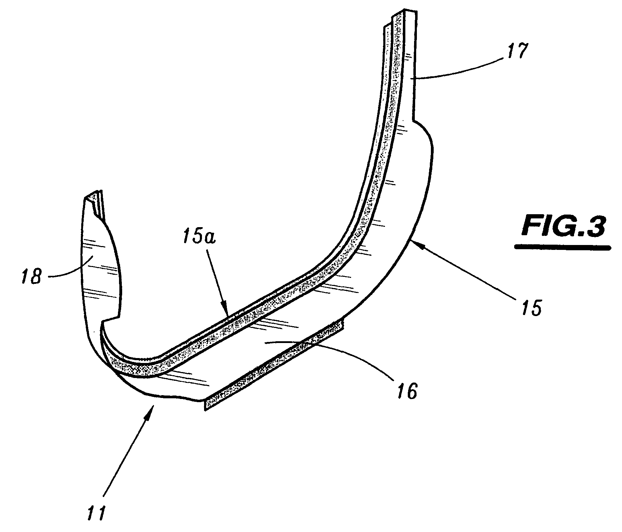

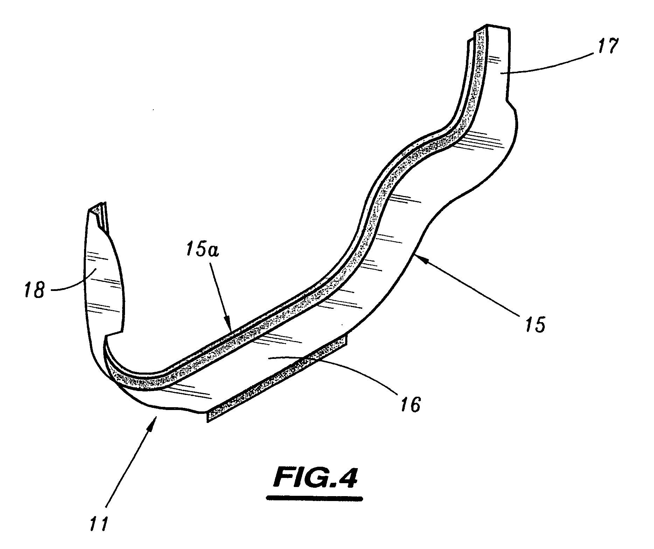

Le profilé 15 présente un contour général en forme de U et peut être utilisé comme élément principal de structure 11 d'une porte avant, ainsi que représenté à la Fig. 3 ou comme élément principal de structure 11 d'une porte arrière, ainsi que représenté à la Fig. 4.

Dans le cas d'une porte arrière, le profilé 15 comporte une portion incurvée formant un passage de roue. De même, certains véhicules automobiles, comme par exemple les véhicules utilitaires, peuvent comporter des portes avant comportant un profilé 15 muni à sa partie avant d'une portion incurvée formant un passage de roue pour la roue avant du véhicule.

Dans l'exemple illustré sur les figures 1 et 2, le renfort de charnières 20 est fixé par exemple par soudage sur le montant latéral 17 du caisson 11. Ce renfort de charnières 20 en aluminium ou en alliage d'aluminium est réalisé par exemple par emboutissage et sa fonction principale est de renforcer la porte 1 en utilisation courante, de renforcer la fixation des charnières et de diffuser l'énergie vers l'arrière du véhicule automobile dans le cas d'un choc avant, tout en permettant l'ouverture de la porte 1 après un choc.

Sur le montant latéral 18 est fixé le renfort de serrure 21 en aluminium ou en alliage d'aluminium réalisé par exemple par emboutissage et dont la fonction est de renforcer la porte 1 au niveau de la serrure et de contribuer à la rigidité de la porte en même temps que le renfort de charnières 20 et le caisson 11 pour permettre l'ouverture de cette porte après un choc. Ce renfort de serrure 21 est fixé sur le montant latéral 18 du caisson 11 par exemple par soudage.

Le renfort de charnières 20 et le renfort de serrure 21 sont reliés entre eux, d'une part, par le bandeau horizontal 22 fermant la partie supérieure du caisson 11 et, d'autre part, par la barre anti-intrusion 23 fixée entre le bandeau 22 et la branche centrale 16 et s'étendant parallèlement audit bandeau 22.

Le bandeau 22 réalisé en aluminium ou en alliage d'aluminium par exemple par extrusion a pour rôle d'absorber les efforts en cas de choc. Par ailleurs, il contribue à la rigidité générale de la porte en étant soudé entre le renfort de charnières 20 et le renfort de serrure 21 et supporte également le cadre 12.

La barre anti-intrusion 23 réalisée également en aluminium ou en alliage d'aluminium par exemple par profilage ou par extrusion en fonction du cahier des charges, a pour but de limiter la pénétration dans le cas d'un choc latéral.

Le cadre 12 en aluminium ou alliage d'aluminium réalisé par exemple par extrusion et cintré a pour fonction de guider la vitre, de supporter les joints d'étanchéité de la vitre et du pavillon du véhicule, d'assurer l'étanchéité de l'habitacle à l'eau, l'air et le bruit, tout en ayant une certaine raideur.

Le panneau 24 extérieur en aluminium ou en alliage d'aluminium est réalisé par exemple par emboutissage et fixé, d'une part, par sertissage sur les renforts 20 et 21 et sur le caisson 11 et, d'autre part, par soudage sur un renfort de panneau, non représenté.

La porte 1 comporte également une plaque 25 par exemple en aluminium ou en alliage d'aluminium moulée reliant le cadre 12, le bandeau 22 et le renfort de charnières 20. Cette plaque assure le guidage de la vitre en partie avant et supporte le rétroviseur non représenté.

La face interne 15a du profilé 15 et la face interne du cadre 12 forment un rebord continu d'étanchéité de la porte 1 en coopérant avec un joint d'étanchéité fixé sur la carrosserie du véhicule automobile.

Grâce à l'emploi d'un caisson réalisé à partir d'un profilé cintré, l'intérieur de la porte 1 est facilement accessible si bien que tous les accessoires de cette porte comprenant notamment le mécanisme d'actionnement de la vitre, la vitre elle-même et l'habillage intérieur de la porte, peuvent être placés dans une cassette montée et fixée à l'intérieur du caisson 11.

Les différents éléments composant la porte 1 sont dimensionnés en fonction du cahier des charges imposé par le constructeur de façon à résister aux différents tests de choc.

La conception de la porte selon l'invention permet de réduire au maximum les chutes de matière ce qui permet d'utiliser tous les avantages de l'aluminium, tout en minimisant ses inconvénients.

## Revendications

1. Elément de structure d'une porte de véhicule automobile, tel qu'un caisson (11), supportant un renfort de charnières (20), un renfort de serrure (21), un bandeau horizontal (22), une barre anti-intrusion (23) un cadre (12) et un panneau extérieur (24), l'élément de structure comprenant une seule pièce formée par un profilé (15) cintré présentant un contour général correspondant au contour de la partie inférieure de l'entrée de porte du véhicule recouverte par le panneau extérieur (24), le profilé (15) comportant une branche centrale (16) reliant deux montants latéraux (17, 18) opposés sur chacun desquels est fixé respectivement le renfort de charnières (20) et le renfort de serrure (21) reliés entre eux, d'une part, par le bandeau horizontal (22) fermant la partie supérieure du profilé (15) et, d'autre part, par la barre anti-intrusion (23).

2. Elément de structure selon la revendication 1, **caractérisé en ce que** le profilé (15) présente un contour général sensiblement en forme de U.

3. Elément de structure selon la revendication 1 ou 2, **caractérisé en ce que** le profilé (15) est mis en forme par une profileuse.

4. Elément de structure selon la revendication 1 ou 2, **caractérisé en ce que** le profilé (15) est formé par extrusion.

5. Elément de structure selon l'une quelconque des revendications précédentes, **caractérisé en ce que** le profilé (15) est détouré après le cintrage.

6. Elément de structure selon l'une quelconque des revendications 1 à 4, **caractérisé en ce que** le profilé (15) est détouré avant lé cintrage.

7. Elément de structure selon l'une quelconque des revendications précédentes, **caractérisé en ce que** la face interne (15a) du profilé (15) et la face interne du cadre (12) forment un rebord continu d'étanchéité de la porte (1).

8. Elément de structure selon l'une quelconque des revendications précédentes, **caractérisé en ce que** le profilé (15) est en aluminium ou en alliage d'aluminium.

9. Elément de structure selon l'une quelconque des revendications 1 à 3 ou 5 à 7, **caractérisé en ce que** le profilé (15) est en acier.

10. Porte (1) de véhicule automobile, **caractérisé en ce qu'**elle comporte un élément de structure (11) selon l'une quelconque des revendications 1 à 9.

## Patentansprüche

1. Bauelement einer Kraftfahrzeugtür, so wie ein Kasten (11), tragend eine Verstärkung für Scharniere (20) trägt, eine Verstärkung für ein Schloß (21), ein horizontales Band (22), eine Stange gegen Eindringen (23), einen Rahmen (12) und ein Außenpaneel (24), wobei das Bauelement ein einziges Teil aufweist, welches geformt ist durch ein gebogenes Profil (15), dessen allgemeine Kontur korrespondiert mit der Kontur des unteren Teils des Türeingangs des Fahrzeuges, der vom Außenpaneel (24) überdeckt ist, wobei das Profil (15) einen zentralen Zweig (16) aufweist, der zwei seitliche, einander gegenüber liegende Ständer (17, 18) verbindet, wobei auf jedem von diesen die Verstärkung der Scharniere (20) beziehungsweise die Verstärkung des Schlosses (21) befestigt ist, welche ihrerseits miteinander einerseits mittels des horizontalen, das obere Teil des Profils (15) abschließenden Bandes (22) und andererseits mittels der Stange gegen das Eindringen (23) verbunden sind.

2. Bauelement gemäß Anspruch 1, **dadurch gekennzeichnet, dass** das Profil (15) einen allgemeinen im wesentlichen U-förmigen Umriss aufweist.

3. Bauelement gemäß Anspruch 1 oder 2, **dadurch gekennzeichnet, dass** das Profil (15) geformt ist durch ein Walzgerät.

4. Bauelement gemäß Anspruch 1 oder 2, **dadurch gekennzeichnet, dass** das Profil (15) durch Extrudieren geformt ist.

5. Bauelement gemäß einem der vorhergehenden Ansprüche, **dadurch gekennzeichnet, dass** das Profil (15) nach dem Biegen konturgefräst ist.

6. Bauelement gemäß einem der Ansprüche 1 bis 4, **dadurch gekennzeichnet, dass** das Profil (15) vor dem Biegen konturgefräst ist.

7. Bauelement gemäß einem der vorhergehenden Ansprüche, **dadurch gekennzeichnet, dass** die Innenseite (15a) des Profils (15) und die Innenseite des Rahmens (12) eine kontinuierliche undurchlässige Leiste der Tür bilden.

8. Bauelement gemäß einem der vorhergehenden Ansprüche, **dadurch gekennzeichnet, dass** das Profil (15) aus Aluminium oder aus einer Aluminiumlegierung besteht.

9. Bauelement gemäß einem der Ansprüche 1 bis 3 oder 5 bis 7, **dadurch gekennzeichnet, dass** das Profil (15) aus Stahl besteht.

10. Kraftfahrzeugtür (1), **dadurch gekennzeichnet, dass** sie ein Bauelement (11) aufweist gemäß einem der Ansprüche 1 bis 9.

## Claims

1. Structural element of an automotive vehicle door, such as an inner door shell (11) supporting a hinge reinforcement (20), a lock reinforcement (21), a horizontal panel (22), an anti-intrusion bar (23), a frame (12) and external panel (24), with the structural element being made up of a single piece, formed from a bent profiled section (15), whose overall contours correspond to the contours of the lower part of the vehicle doorway covered by the external panel (24), with the profiled section (15) being formed from a central branch (16) which joins two opposite lateral struts (17, 18), to each of which is fixed, respectively, the hinge reinforcement (20) and the lock reinforcement (21), linked to each other by, on the one hand, the horizontal panel (22) which closes off the upper part of the profiled section (15) and on the other hand by the anti-intrusion bar (23).

2. Structural element as described in claim 1, **characterised by** the fact that the profiled section (15) has an overall contour that is effectively U-shaped.

3. Structural element as described in claim 1 or 2, **characterised by** the fact that the profiled section (15) is shaped using a forming machine.

4. Structural element as described in claim 1 or 2, **characterised by** the fact that the profiled section (15) is formed by extrusion.

5. Structural element as described in any of the preceding claims whatsoever, **characterised by** the fact that the profiled section (15) is trimmed after forming.

6. Structural element as described in any of the preceding claims 1 to 4 whatsoever, **characterised by** the fact that the profiled section (15) is trimmed before forming.

7. Structural element as described in any of the preceding claims whatsoever, **characterised by** the fact that the internal face (15a) of the profiled section (15) and the internal face of the frame (12) form a continuous sealing edge for the door (1).

8. Structural element as described in any of the preceding claims whatsoever, **characterised by** the fact that the profiled section (15) is made of aluminium or aluminium alloy.

9. Structural element as described in any of the preceding claims 1 to 3 or 5 to 7 whatsoever, **characterised by** the fact that the profiled section (15) is made of steel.

10. Automotive vehicle door (1) **characterised by** the fact that it includes a structural element (11) as described in any of claims 1 to 9 whatsoever.
